# EUROPÄISCHE PATENTSCHRIFT

(11) **EP 0 569 749 B1**
(45) Veröffentlichungstag und Bekanntmachung des Hinweises auf die Patenterteilung: **03.07.1996**
(21) Anmeldenummer: 93106532.0
(22) Anmeldetag: 22.04.1993
(51) Int. Cl.: C23G 3/00, C22B 1/00

(54) **Schwingbettwascheinrichtung für verölte Metallspäne**
Vibrating bed cleaning device for oil-coated metal chips
Dispositif de nettoyage à lit vibrant pour copeaux métalliques graissés

(30) Priorität: 15.05.1992 DE 4216179
(43) Veröffentlichungstag der Anmeldung: 18.11.1993
(73) Patentinhaber: VAW Aluminium AG, D-53117 Bonn (DE)
(72) Erfinder: Schulz, Hans Hartmut, W-4048 Grevenbroich 5 (DE)
(74) Vertreter: Müller-Wolff, Thomas, Dipl.-Ing.

(56) Entgegenhaltungen:
- WO-A-90/10739
- CA-A- 918 542
- FR-A- 2 100 098
- GB-A- 1 369 706

## Beschreibung

Die Erfindung betrifft ein verfahren zum Reinigen von verölten Metallspänen mittels einer Waschlauge in einer Schwingplattenwaschanlage sowie eine Vorrichtung zur Durchführung dieses Verfahrens.

Die bei der mechanischen Bearbeitung von Werkstücken entstehenden Metallspäne sind durch die dabei in der Regel verwendeten Kühl- und Schmiermittel, d. h. ölhaltige Emulsionen verunreinigt. Diese Metallspäne stellen sortenreinen und damit wertvollen Metallschrott dar, der wieder erschmolzen und als Vormaterial zurückgewonnen werden kann. Hierzu ist es jedoch erforderlich, die obengenannten Verunreinigungen zuvor von den Metallspänen zu entfernen.

Waschvorrichtungen für Metallspäne in Form von Horizontaltrommelmaschinen sind bekannt. Die Späne werden hierbei durch eine rotierende Trommel gefördert, die einen im Querschnitt kreisabschnittsförmigen Waschlaugensumpf bildet. Die Aufgabe und Abgabe von Spänen und Waschlauge findet über zentrale Öffnungen in abschließenden Stirnwänden der Trommel statt. Der Nachteil solcher Anlagen ist die aufwendige und großbauende Konstruktion sowie große Leckagen an den Aufgabe- und Abgabevorrichtungen der Trommel. Aufgrund des tiefen, schlecht durchströmten Waschlaugensumpfes ist der Reinigungseffekt gering.

Es sind weiterhin Waschvorrichtungen bekannt, bei denen zu reinigendes Schüttgut, insbesondere auch Metallspäne, unter dem Einfluß der Schwerkraft über geneigte Schwingplatten rutscht, wobei eine Waschflüssigkeit darüberfließt. In nachteiliger Weise werden hierbei die Verunreinigungen mit der Förderrichtung des Schüttgutes mitgetragen.

Hiervon ausgehend liegt der Erfindung die Aufgabe zugrunde, ein Verfahren und eine Vorrichtung der eingangs genannten Art bereitzustellen, die zu verbesserten Reinigungsergebnissen bei mäßigem Einsatz von Waschflüssigkeit führt.

Die Lösung hierfür besteht in einem Verfahren, das sich dadurch auszeichnet, daß die Metallspäne an einem tieferen Ende einer zumindest in einem Abschnitt ansteigenden Schwingplatte aufgegeben werden und in Richtung auf das andere höhere Ende gegen den Anstieg der Platte gefördert werden, um diese über deren höherliegende als Späneaustragskante dienende Endkante zu verlassen, während die Waschlauge in dem zumindest einen ansteigenden Abschnitt aufgegeben wird und in Richtung auf das erste tiefere Ende der Schwingplatte strömt, um diese über deren als Überlaufkante ausgestaltete tiefere Endkante zu verlassen.

Mit der hiermit angegeben Verfahrensweise werden die Metallspäne gegen den Strom der Waschlauge geführt, so daß zunächst eine Grobreinigung der verschmutzt aufgegebenen Metallspäne mit bereits leicht kontaminierter Waschlauge erfolgt, während sie anschließend die Schwingplatte erst im Anschluß an einen Durchlauf durch den Aufgabebereich für die Reinlauge verlassen. Das heißt, die Metallspäne kommen zuletzt mit reiner bzw. im Umlauf gereinigter Waschlauge in Kontakt, bevor ein anschließender Trocknungs- oder Entwässerungsprozeß beginnt.

In bevorzugter Ausgestaltung findet der überwiegende Teil des Reinigungsvorganges unter einem Laugenspiegel in einem durch den zumindest einen ansteigenden Abschnitt einerseits und die Überlaufkante andererseits gebildeten Waschlaugensumpf statt. Der Waschlaugensumpf wird je nach Höhe des Laugenstandes im Vergleich mit dem Aufgabebereich für die Reinlauge nur relativ langsam durchströmt, so daß eine intensive Reinigungswirkung erfolgt. In bevorzugter Ausbildung des Verfahrens findet am höheren Ende der Schwingplatte eine Entwässerung der Metallspäne vor dem Verlassen der Platte statt, vorzugsweise durch Ausbildung eines Abschnitts der Schwingplatte als Spaltsieb. Hierbei fördert die Schwingbewegung der Platte das Entwässern in erheblichem Maße. Auf den Einsatz von Zentrifugen oder dergleichen für einen abschließenden Trockenvorgang kann hierdurch ggfs. verzichtet werden.

Während in bevorzugter Weise der überwiegende Teil des Waschvorganges unter dem Laugenspiegel erfolgt, ist es andererseits vorgesehen, die Waschlauge mittels Sprühdüsen auf einen oberhalb des Laugenspiegels liegenden Abschnitt der Schwingplatte aufzugeben. Die Impulswirkung der Düsenstrahlen kommt somit ungeschmälert zur Wirkung. Auch dies verbessert das Verfahren erheblich.

Eine Vorrichtung zum Reinigen von verölten Metallspänen mittels einer Waschlauge zur Durchführung des obengenannten Verfahrens umfaßt zumindest eine Schwingplatte, die einen tieferliegenden Bodenabschnitt hat, der von einer Stirnwand mit Überlaufkante und höheren Seitenwänden zur Ausbildung einer Trogform eingefaßt ist, die zumindest einen daran anschließenden ansteigenden zweiten Bodenabschnitt hat, der die Trogform abschließt und in einer nicht-überhöhten stirnseitigen Späneaustragskante endet, eine Späneaufgabeeinheit oberhalb des ersten tieferliegenden Bodenabschnittes nahe der Überlaufkante, eine Laugenaufgabeeinheit oberhalb des zumindest einen ansteigenden Bodenabschnitts und einen Schwingungserzeuger, der mit der Schwingplatte verbunden ist. Stirnwand mit Überlaufkante, ansteigender Bereich der Bodenplatte und Seitenwände, die fest angesetzt sind, bilden einen in Förderrichtung keilförmig ansteigenden Waschlaugensumpf aus. Ein Schwingungserzeuger bekannter Bauart stellt sicher, daß die Metallspäne unter Berücksichtigung ihrer Haftung gegenüber dem Bodenblech gleichmäßig in eine Richtung gefördert werden und zwar gegen den Anstieg des ansteigenden Bereichs.

Üblicherweise ist der tiefere erste Bodenabschnitt rein horizontal ausgebildet, während der zumindest eine ansteigende Bodenabschnitt eine Neigung zwischen 2,5° und 8° in Förderrichtung aufweist. Beide können jedoch auch mit unterschiedlicher oder mit gleicher Neigung ineinander übergehen. Zur Unterstützung des Förderprozesses einerseits und gleichzeitig zur Verwirbelung der Waschlaugenströmung können an der Schwingplatte quer zur Förderrichtung verlaufende Strömungsstörer ausgebildet sein, die in Förderrichtung betrachtet mit einer Neigung von 2,5° bis 8° ansteigen und etwa rechtwinklig abgesetzte Endkanten haben. Die senkrechten Flanken wirken hierbei zugleich als Mitnehmer- bzw. als Haltekanten.

In weiterer Ausgestaltung kann vor der Späneaustragskante oder Späneüberlaufkante eine mit Durchbrüchen versehene Entwässerungszone mit einem insbesondere horizontalen dritten Bodenbereich ausgebildet sein. Hierbei kann insbesondere ein Spaltsieb vorgesehen sein, das ein Verhaken oder Durchfallen von einzelnen Spänen vermeidet. Der bereits durch die Schwingung unterstützte Entwässerungsvorgang kann noch durch ein Druckgebläse oberhalb des Spaltsiebes, das etwa senkrecht auf die Späne bläst, unterstützt werden.

Zur kontinuierlichen Aufgabe von Spänen im Bereich des Waschlaugensumpfes und zwar insbesondere in Nähe der Überlaufkante für die Waschlauge können an sich bekannte Fördermittel verwendet werden, insbesondere eine Dosierförderschwingrinne. Sofern die Form der Späne in Bezug auf Verhakungsgefahr dieses zuläßt, ist auch ein Schneckenförderer möglich.

In besonderer Weiterführung der Erfindung können mehrere Schwingplatten mit jeweils einer Späneaufgabeeinheit, einer Waschlaugenaufgabeeinheit und ggfs. einer Entwässerungszone absteigend höhenversetzt in Förderrichtung aufeinanderfolgen, wobei jeder dieser Anlagenteile vorzugsweise einen eigenen Waschlaugenumlauf hat, so daß die Waschlaugenqualität in Förderrichtung zunimmt.

Im Sinne einer geringen Arbeitsplatzbelastung kann weiterhin vorgesehen sein, daß eine Abzugshaube mit einem Brüdenabzug für die zumindest eine trogförmige Schwingplatte vorgesehen ist, die mit einem elastischen Kompensator oder einer Tauchdichtung mit flüssigem Sperrmedium oder einer Lippendichtung zumindest gegenüber den Seitenwänden abgedichtet ist. Die aus dem Brüdenabzug abströmenden Dämpfe werden vorzugsweise niedergeschlagen und dem Waschflüssigkeitskreislauf wieder zugeführt.

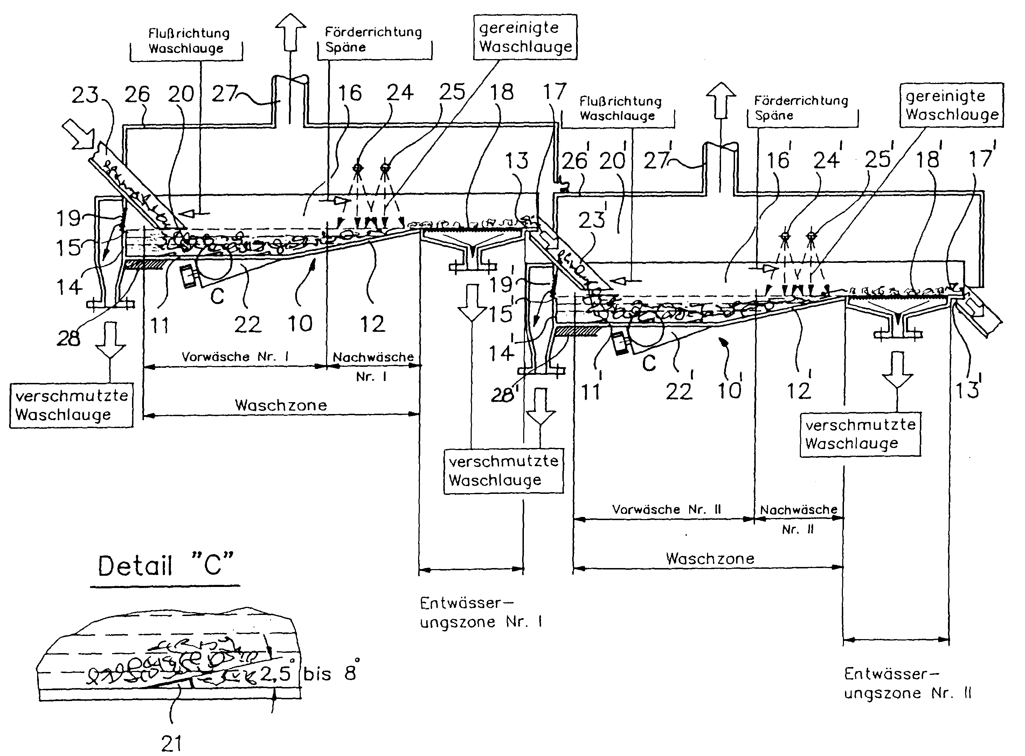

Ein bevorzugtes Ausführungsbeispiel der Erfindung wird nachstehend anhand der Zeichnung beschrieben. Es ist hierbei eine Anordnung mit zwei kaskadenartig angeordneten Fließbettvorrichtungen von jeweils gleichem Aufbau gezeigt. Die Bezifferung stimmt dabei überein.

Hierbei besteht ein sogenanntes Fließbett aus jeweils einer trogförmigen Schwingplatte 10, das einen horizontalen ersten Bodenabschnitt 11, einen sich daran anschließenden zweiten in der Späneförderrichtung ansteigenden Bodenabschnitt 12 und einen wiederum horizontalen dritten Bodenabschnitt 13 mit einem Spaltsieb 18 aufweist. Am Ende des ersten horizontalen Bodenabschnitts ist eine Stirnwand 14 mit Überlaufkante 15 vorgesehen, die die Höhe des Flüssigkeitsspiegels im Waschlaugensumpf bestimmt. Seitliche Leitbleche 16 haben eine demgegenüber noch größere Höhe. Am Spaltsieb 18 endet das Bodenblech mit einer freien Späneaustragskante 17.

Je nach Waschverweilzeit und Verhältnis von Spänemenge zu Waschlaugenvolumen in dem Fließbett ist eine derartige Troggeometrie in Stufenform (paralleler Niveauversatz zwischen tiefliegendem ersten Bodenabschnitt 11 (Trogboden) der Waschzone und hochliegendem dritten Bodenabschnitt 13 der Entwässerungszone) von Vorteil. Der zumindest eine ansteigende Bodenbereich 12 weist eine Schräge von 2,5° bis 8°, insbesondere 6° auf. Die Stirnwand 14 des Troges bildet eine Überlaufkante 15 für die verschmutzte Lauge. Oberhalb der Kante 15 ist ein weiteres Spaltsieb 19 zur Grobteilvorabscheidung aus der mit Schneidemulsion kontaminierten Waschlauge vorgesehen. Auf den Trogboden im Bereich des Waschlaugensumpfes 20 können quer zur Förderrichtung (90°) Strömungsstörer 21 angebracht werden. Die Neigung derartiger Strömungsstörer 21 kann je nach Spänedurchmischungsgrad zwischen 2,5° und 8° in Förderrichtung liegen. Im Regelfall sind diese jedoch nicht notwendig. Für die Unterhaltung des Förderstromes der Späne reicht die Schwingungsbewegung der trogförmigen Schwingplatte 10 voll aus. Hierzu dient ein Schwingungserzeuger 22, der unterhalb der Schwingplatte 20 befestigt ist. Oberhalb des Waschlaugensumpfs befinden sich eine Späneaufgabevorrichtung in Form einer Dosierförderschwingrinne 23, oberhalb des ansteigenden Bodenabschnitts eine Waschlaugenaufgabevorrichtung in Form zweier querverlaufender Düsenstöcke 24, 25. Die gesamte Anordnung ist jeweils durch eine Haube 26 mit einem Brüdenabzug 27 gekapselt. Unterhalb des ersten Abschnitts 11 ist eine Wärmeisoierung 28 abgebrochen angedeutet.

Jede der Fließbettvorrichtungen (I, II) ist systematisch in zwei Waschzonen (Vorwäsche, Nachwäsche), eine Waschlaugenaustragsvorrichtung in Form eines Überlaufs mit Spaltsieb sowie eine der Nachwäsche nachgeschaltete Entwasserungszone mit Spaltsieb und Späneaustragseinrichtung eingeteilt. Das Erfordernis einer Entwässerungszone hängt von dem Einsatzgut sowie dem Feuchteverschleppungsgrad der Waschlauge von einer Reinigungsstufe zur anderen ab. Vor der Entwässerungsstufe sind die Düsenstöcke für die Einbringung der reinen Waschlauge (NABUCLEAN) angeordnet. Sinnvoll ist es, die Späne unmittelbar nach dem Verlassen des Waschlaugensumpfes (Vorwäsche) mit der Reinlauge (Nachwäsche) zu beaufschlagen. Die tragförmnige Schwingplatte ist an allen Seiten durch die geschlossene Haube mit kontrolliertem Brüdenabzug gekapselt. Abgedichtet ist die Schwingplatte gegenüber der Haube je nach Einsatzfall mit einem Kompensator, einer Tauchdichtung mit flüssigem Sperrmedium (Wasser) oder einer Lippendichtung. Diese Arten von Dichtungssystemen gewährleisten eine optimale Abdichtung zwischen den schwingenden und festen Bauteilen. Aus energietechnischen Gesichtspunkten kann sich außen am Schwingplattentrog eine Wärmeisolierung befinden.

An der Späneaufgabevorrichtung werden die verölten Metallspäne mittels Dosierförderschwingrinne in das Fließbett aufgegeben. Anschließend tauchen die Späne im freien Fall in das Waschlaugebad ein. Das Waschvorgang findet überwiegend unterhalb des Laugenspiegels statt. Im Endbereich der Waschzone (Förderrichtung) wird die Aufgabe der gereinigten Waschlauge mit Verteilerdüsen je nach dem Einsatz und Material in einer oder mehreren Stufen sowie mit unterschiedlichen Spülbereichen vollzogen. Somit werden die Späne am Ende des Waschzonenbereiches mit der frischen Lauge benetzt. Dies kann bei stark oxidierenden Materialien unterhalb des Laugenspiegels erfolgen, andernfalls kann dies auch über dem Laugenspiegel bei abgesenktem Flüssigkeitsspiegel erfolgen. Der Waschvorgang wird, wie oben beschrieben, im Gegenstrom durchgeführt, um einen optimalen Reinigungseffekt zu erzielen. Das heißt, die saubere Waschlauge wird am Waschzonenende (Förderrichtung) auf die Späne gegeben (Nachwäsche) und verläßt mit Öl- und/oder Schneidemulsion kontaminiert im Überlauf beim Späneeintrag das Fließbett. Die Späne hingegen werden am Waschlaugenüberlauf in den Waschlaugensumpf aufgegeben (Vorwäsche) und verlassen nach der Waschlaugenaufgabe die Waschzone. Nach dem Waschzonenbereich gelangen die Späne in die Entwässerungszone. In diesem Bereich werden die Späne, wenn notwendig, entwässert, um die Verschleppungsrate der Lauge so gering wie möglich zu halten. Es sind zwei hintereinandergeschaltete Fließbettvorrichtungen im Ausführungsbeispiel gezeigt. Der Verfahrensablauf in beiden Anlagenteilen ist identisch.

### Bezugszeichenliste

- 10: Schwingplatte
- 11: erster horizontaler Bodenabschnitt
- 12: zweiter ansteigender Bodenabschnitt
- 13: dritter horizontaler Bodenabschnitt
- 14: Stirnwand
- 15: Überlaufkante
- 16: Seitenbleche
- 17: Späneaustragskante
- 18: Spaltsieb (1)
- 19: Spaltsieb (2)
- 20: Waschlaugensumpf
- 21: Strömungsstörer
- 22: Schwingungserzeuger
- 23: Dosierförderschwingrinne
- 24: Düsenstock
- 25: Düsenstock
- 26: Haube
- 27: Brüdenabzug
- 28: Wärmeisolierung

## Patentansprüche

1. Verfahren zum Reinigen von verölten Metallspänen mittels einer Waschlauge,
dadurch gekennzeichnet,
daß die Metallspäne an einem tieferen Ende einer Schwingplatte (10) aufgegeben und in Richtung auf das höhere Ende gefördert werden, wobei die Schwingplatte (10) aus einem horizontalen Bodenabschnitt (11) und einem ansteigendem Abschnitt (12) besteht und die Metallspäne gegen den Anstieg der Platte gefördert werden, um diese über deren höherliegende, als Späneaustragskante (17) dienende Endkante zu verlassen, während die Waschlauge in dem ansteigenden Abschnitt (12) aufgegeben wird und in Richtung auf das tiefere Ende der Schwingplatte strömt, um diese über deren als Überlaufkante (15) ausgestaltete tiefere Endkante zu verlassen, wobei der Waschvorgang überwiegend unter einem Laugenspiegel in einem zwischen der Überlaufkante (15) einerseits und dem zumindest einen ansteigenden Abschnitt (12) der Schwingplatte (10) andererseits gebildeten Waschlaugensumpf (20) durchgeführt wird und am höheren Ende der Schwingplatte (10) eine Entwässerung der Metallspäne vor dem Verlassen der Platte über die höherliegende Späneaustragskante (17) erfolgt.

2. Vorrichtung zum Reinigen von verölten Metallspänen mittels einer Waschlauge, bestehend aus einem tieferliegenden Bodenabschnitt, der von einer Stirnwand mit Überlaufkante und höheren Seitenwänden zur Ausbildung einer Trogform eingefaßt ist, gekennzeichnet durch einen tieferliegenden Bodenabschnitt (11) mit einem daran anschließenden ansteigenden zweiten Bodenabschnitt (12), der die Trogform abschließt und in einer nicht überhöhten stirnseitigen Späneaustragskante (17) endet, wobei eine Späneaufgabeeinheit (23) oberhalb des ersten tieferliegenden Bodenabschnitts (11) nahe der Überlaufkante (15) angeordnet ist und oberhalb des zumindest einen ansteigenden Bodenabschnitt (12) eine Laugenaufgabeeinheit (24, 25) mit einem Schwingungserzeuger (22) angeordnet ist, der mit der Schwingplatte (10) verbunden ist.

3. Vorrichtung nach Anspruch 2,
dadurch gekennzeichnet,
daß der zumindest eine ansteigende zweite Bodenabschnitt (12) eine Neigung zwischen 2,5 ° und 8° aufweist.

4. Vorrichtung nach einem der Ansprüche 2 oder 3,
dadurch gekennzeichnet,
daß an der Schwingplatte (10) quer zur Förderrichtung verlaufende Strömungsstörer (21) ausgebildet sind, die in Förderrichtung betrachtet mit einer Neigung von 2,5° bis 8° ansteigen und etwa rechtwinklig abgesetzte Endkanten haben.

5. Vorrichtung nach einem der Ansprüche 2 bis 4,
dadurch gekennzeichnet,
daß vor der Späneaustragskante (17) eine Entwässerungszone in einem - insbesondere horizontalen - dritten Bodenbereich (13) ausgebildet ist, vorzugsweise als Spaltsieb (18).

6. Vorrichtung nach einem der Ansprüche 2 bis 5,
dadurch gekennzeichnet,
daß oberhalb der Überlaufkante (15) ein Spaltsieb (19) angeordnet ist.

7. Vorrichtung nach einem der Ansprüche 2 bis 6,
dadurch gekennzeichnet,
daß zumindest eine Abzugshaube (26) mit einem Brüdenabzug (27) für die zumindest eine trogförmige Schwingplatte (10) vorgesehen ist, die mit einem elastischen Kompensator oder einer Tauchdichtung mit flüssigem Sperrmedium oder einer Lippendichtung zumindest gegenüber den Seitenwänden (16) der Schwingplatte (10) abgedichtet ist.

## Claims

1. A method of cleaning oil-stained metal chips by means of a washing liquor,
characterised in
that the metal chips are introduced at a lower end of an oscillating plate (10) and conveyed towards the higher end, with the oscillating plate (10) consisting of a horizontal base portion (11) and a rising portion (12) and with the metal chips being conveyed against the rise of the plate and leaving same by moving across its higher end edge serving as a chip removing edge (17), whereas the washing liquor is added in the rising portion (12), flows towards the lower end of the oscillating plate and leaves same by moving across its lower end edge serving as an overflow edge (15), with the washing process taking place predominantly below a liquor level in a liquor sump (20) formed between the overflow edge (15) on the one hand and the at least one rising portion (12) of the oscillating plate (10) on the other hand and with the metal chips being dewatered at the higher end of the oscillating plate (10) prior to leaving the plate by moving across the higher chip removing edge (17).

2. A device for cleaning oil-stained metal chips by means of a washing liquor, consisting of a lower base portion which is surrounded by an end wall of an overflow edge and higher side walls to obtain a trough shape,
characterised by
a lower base portion (11) with an adjoining rising second base portion (12) which closes the trough shape and ends in a non-raised chip removing end edge (17), with a chip introducing unit (23) being arranged above the first lower base portion (11) near the overflow edge (15) and with a liquor adding unit (24, 25) with an oscillation generating device (22) connected to the oscillating plate (10) being arranged above the at least one rising base portion (12).

3. A device according to claim 2,
characterised in
that the at least one rising second base portion (12) comprises an inclination of 2.5 to 8°.

4. A device according to any one of claims 2 or 3,
characterised in
that the oscillating plate (10) is provided with a flow interrupting device (21) which extends transversely to the conveying direction, which, if viewed in the conveying direction, risesat an inclination of 2.5 to 8° and comprises approximately rectangularly arranged end edges.

5. A device according to any one of claims 2 to 4,
characterised in
that in front of the chip removing edge (17), there is arranged a dewatering zone in a - especially horizontal - third base region (13), preferably in the form of a wedge-wire sieve (18).

6. A device according to any one of claims 2 to 5,
characterised in
that a wedge-wire sieve (19) is arranged above the overflow edge (15).

7. A device according to any one of claims 2 to 6,
characterised in
that at least one extraction hood (26) with a vapour discharge unit (27) is provided for the at least one trough-shaped oscillating plate (10), which hood (26), at least relative to the side walls (16) of the oscillating plate (10), is sealed by means of a resilient compensator or an immersion seal with a liquid blocking medium or a lip seal.

## Revendications

1. Procédé pour nettoyer au moyen d'une lessive des copeaux métalliques salis par de l'huile, caractérisé par le fait que les copeaux métalliques sont chargés à l'extrémité inférieure d'une plaque vibrante (10) et déplacés dans la direction de l'extrémité supérieure, cependant que la plaque vibrante (10) est constituée par une partie de fond (11) horizontale et par une partie montante (12), et que les copeaux métalliques sont déplacés dans le sens de la montée de la plaque pour quitter celle-ci au-dessus de son bord d'extrémité qui est situé à un niveau plus élevé et qui sert de bord de déchargement des copeaux (17), tandis que la lessive est amenée dans la partie montante (12), et qu'elle s'écoule dans la direction de l'extrémité plus profonde de la plaque vibrante pour quitter celle-ci au-dessus de son bord d'extrémité qui est situé à un niveau inférieur et qui est réalisé sous la forme d'un bord de déversement (15), et cependant que l'opération de lavage est réalisée d'une manière prépondérante au-dessous du niveau de la lessive dans une cuve à lessive (20) qui est formée entre le bord de déversement (15), d'une part, et la ou les parties montantes (12) de la plaque vibrante (10), d'autre part, et qu'une élimination de l'eau des copeaux métalliques a lieu à l'extrémité supérieure de la plaque vibrante (10) avant qu'ils ne quittent la plaque par le bord de déchargement des copeaux (17) qui est situé à un niveau plus élevé.

2. Dispositif pour nettoyer au moyen d'une lessive des copeaux métalliques salis par de l'huile, constitué par une partie de fond qui est située à un niveau inférieur et qui est entourée par une paroi frontale pourvue d'un bord de déversement et par des parois latérales plus élevées pour donner la forme d'une cuve, caractérisé par une partie de fond (11) située à un niveau inférieur et pourvue d'une deuxième partie de fond montante (12) qui se raccorde à elle, qui ferme la forme de la cuve et qui se termine par un bord frontal non surélevé de déchargement des copeaux (17), cependant qu'une unité de chargement des copeaux (23) est disposée au voisinage du bord de déversement (15), au-dessus de la première partie de fond (11) qui est située à un niveau inférieur, et qu'une unité d'amenée de la lessive (24, 25) est disposée au-dessus de la ou des parties de fond montantes (12), un générateur de vibrations (22) étant relié à la plaque vibrante (10).

3. Dispositif selon la revendication 2, caractérisé par le fait que la ou les deuxièmes parties de fond montantes (12) présentent une inclinaison comprise entre 2,5° et 8°.

4. Dispositif selon l'une des revendications 2 et 3, caractérisé par le fait que des organes de perturbation de l'écoulement (21) sont formés sur la plaque vibrante (10), transversalement par rapport à la direction du déplacement, et qu'ils montent dans la direction du déplacement en présentant une inclinaison de 2,5° à 8° et en comprenant des bords d'extrémité qui sont pliés vers le bas à peu près à angle droit.

5. Dispositif selon l'une des revendications 2 à 4, caractérisé par le fait qu'une zone d'élimination de l'eau est constituée, de préférence sous la forme d'un tamis à fentes (18), dans une troisième zone de fond (13) - en particulier horizontale -, en amont du bord de déchargement des copeaux (17).

6. Dispositif selon l'une des revendications 2 à 5, caractérisé par le fait qu'un tamis à fentes (19) est disposé au-dessus du bord de déversement (15).

7. Dispositif selon l'une des revendications 2 à 6, caractérisé par le fait qu'il est prévu au moins une hotte (26) qui est pourvue d'un conduit d'évacuation des vapeurs (27), qui est destinée à la ou aux plaques vibrantes en forme de cuve (10) et qui est rendue étanche, du moins par rapport aux parois latérales (16) de la plaque vibrante (10), au moyen d'un compensateur élastique ou d'un joint à immersion à liquide d'obturation ou d'un joint à lèvres.
